# EUROPEAN PATENT SPECIFICATION

(11) **EP 0 947 367 B1**
(45) Date of publication and mention of the grant of the patent: **13.08.2003**
(21) Application number: 98203925.7
(22) Date of filing: 19.11.1998
(51) Int. Cl.: B60K 15/04

(54) **Filler cap**
Einfüllöffnungs-Verschlusskappe
Bouchon de remplissage

(30) Priority: 31.03.1998 GB 9806936
(43) Date of publication of application: 06.10.1999
(73) Proprietor: METRO PRODUCTS (ACCESSORIES & LEISURE) LIMITED, Crawley, West Sussex RH10 2UY (GB)
(72) Inventor: Crozier, Stuart, Crawley, West Sussex RH11 9LR (GB)
(74) Representative: Addison, Ann

(56) References cited:
- FR-A- 1 597 017
- FR-A- 2 265 631
- FR-A- 2 466 403
- US-A- 2 306 699
- US-A- 3 126 728
- US-A- 3 888 381
- US-A- 5 110 003

## Description

This invention concerns filler caps, and particularly replacement fuel filler caps for use when an original filler cap has become lost or stolen or redundant for reasons of wear and tear or damage, according to the preamble of claim 1.

A replacement fuel filler cap, which is the subject of U.K. registered design no. 1046320, is already known comprising a head having an outer rim formed with a manual grip, and a friction element mounted on a central shaft of the head, the friction element comprising a series of curved flexible veins extending outwardly from the shaft in a generally tangential direction. In use, the outer edges of the flexible veins engage an internal wall of a filler pipe in a friction fit.

Such a filler cap provides a temporary closure for a fuel filler pipe, in which the cap is held in place by frictional forces. However, there is no positive locking engagement of the fuel filler cap relative to the filler pipe and so it does not provide an acceptable permanent replacement fuel filler cap.

US Patent no. 3888381 discloses a device for preventing withdrawal of liquid from a fuel tank comprising two spider-like sections each having a central plate with a plurality of legs, the two plates being spaced one above the other such that the legs of each spider extend outwardly and toward the other spider, where corresponding legs are arranged in pairs. Where each pair crosses, they are interlocked such that when a screw passing through the plates is turned, the plates draw together expanding the legs against the interior wall of the filler pipe. The screw is then severed at a position above the upper central plate and therefore the device can only be removed using special tooling.

The closest prior art document FR-A-2 265 631, which is equivalent to UK published patent application no. 1487489, discloses a removable anti-theft cap comprising a head connected to a central pin around which are disposed three equally spaced pivoted claws, each being engaged with a drive member, itself engaged with the central pin. Rotation of the pin causes translatory movement of the drive member axially of the pin to produce pivotal movement of the claws such that the claws extend radially outwardly to engage the surface of an inlet. The cap is also equipped with a safety lock for locking the cap in place.

The present invention offers a repeatedly re-usable filler cap with an arrangement for positively locking the cap on the end of a filler pipe.

The present invention also seeks to provide a replacement fuel filler cap which is universal in that it is adaptable to suit a wide variety of automotive vehicles.

According to the present invention there is provided a filler cap comprising a head for closing an end of a filler pipe and a locking device mounted on the head and engageable within the filler pipe for securing the cap in place, the locking device comprising a central externally threaded shaft and a locking cage surrounding the central shaft, the shaft and the cage being rotatable relative to one another to expand a locking section of the cage generally radially outwardly into locking engagement with the internal wall of the filler pipe, the locking cage comprising an internally threaded collar engaged with the centrally externally threaded shaft for rotation relative thereto and longitudinal movement therealong, and a plurality of locking arm for locking engagement with the internal wall of the filler pipe, characterised in that each locking arm has first end fixedly attached to the collar and a second free end engaged with a portion of the head and is bent to form a locking elbow which is arranged to expand generally radially outwardly in response to movement of the collar longitudinally along the shaft towards the head.

Preferably, each arm has a stiffened section adjacent the locking collar, i.e. on one side of the locking elbow, and a flexible section adjacent the head, i.e. on the other side of the locking elbow.

An advantage of this arrangement is that as the locking elbow of each arm engages the internal wall of the filler pipe and locks against it, continued rotation of the central shaft relative to the collar has the effect of flexing the upper arms and allowing the head to move into increasingly firm engagement with the end of the filler pipe.

A further preferred embodiment of the invention features means for limiting the force applied between the central shaft and the collar and hence the outward locking force excerpted between the locking elbows and the internal wall of the filler pipe.

For example, such force limiting means may comprise a ratchet connection between a portion of the head and the central shaft.

Another preferred embodiment of the invention features a removable key for locking the fuel filler cap in place.

For example, the removable key may be in the form of a male key element and a female key opening, one provided at and end of the central shaft and the other provided on a portion of the head.

The invention is described further, by way of example, with reference to the accompanying drawings in which:
Figure 1 is a perspective view of a replacement fuel filler cap according to the present invention;
Figure 2 is a side view partly in section of the filler cap shown in Figure 1;
Figure 3 is a schematic side view illustrating operation of the filler cap in use;
Figure 4 is a side view partly in section of a second embodiment of fuel filler cap according to the present invention;
Figure 5A shows a detail of a central shaft of the fuel filler cap of Figure 4, and Figure 5B shows a detail of a manual grip of a head of the filler cap of Figure 4;
Figure 6 is a side view partly in section of a third embodiment of fuel filler cap according to the present invention; and
Figure 7A is a detail of the central shaft of the fuel filler cap shown in Figure 6, and Figure 7B is a detail of a central manual grip of a head of the petrol filler cap shown in Figure 6.

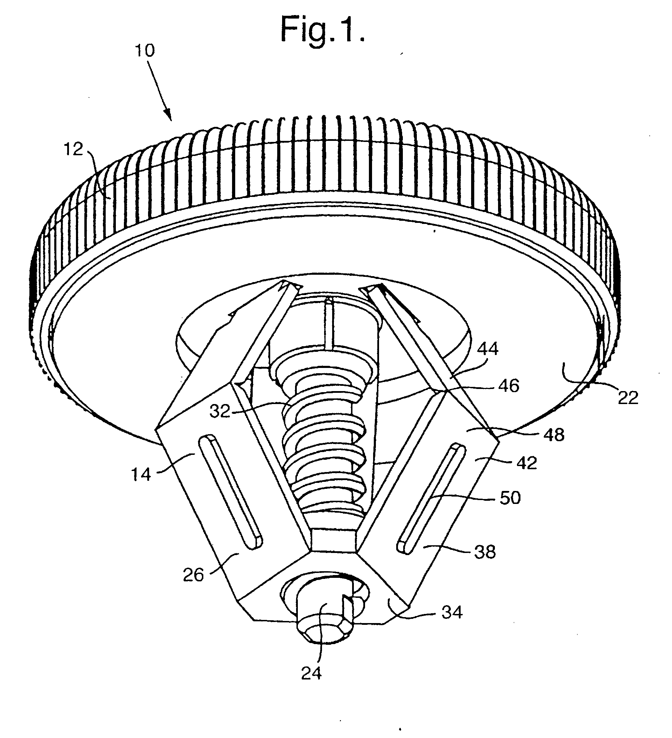

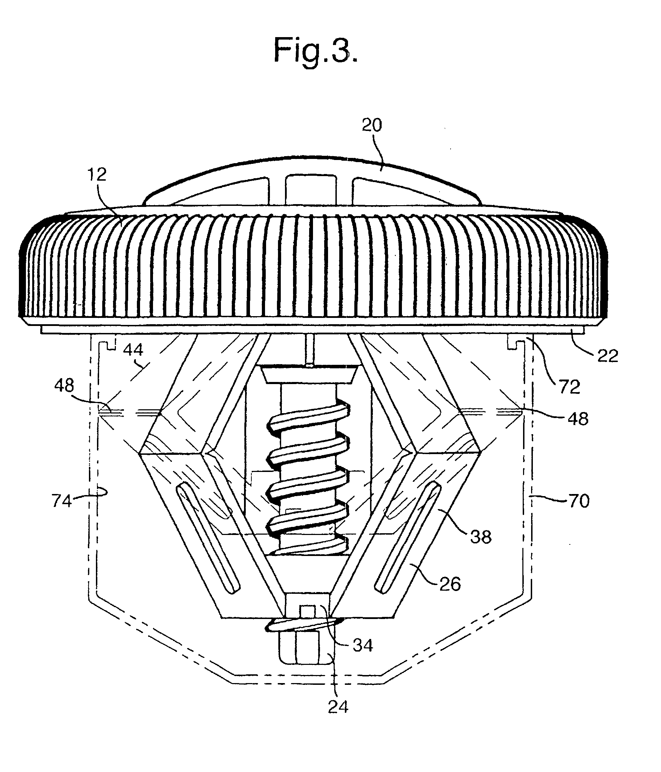

Referring initially to Figures 1 to 3, these show a fuel filler cap 10 according to the present invention having a head 12 for closing and end of a fuel filler pipe (shown in dashed lines in Figure 3), and a locking device 14 mounted on the head 12.

More particularly, the head 12 comprises an outer cup-shaped element 16 and an inner circular plate element 18 seated within the cup-shaped element 16. The plate element 18 is rotatable relative to the cup-shaped element 16 and is formed with an upstanding central manual grip 20. The flat undersurface of the cup-shaped element 16 has adhered thereto an annular rubber sealing ring 22.

The locking device 14 comprises a central shaft 24 rigidly attached to and extending longitudinally from the circular plate element 18, and a locking cage 26 mounted on the cup-shaped element 16 as will be described below.

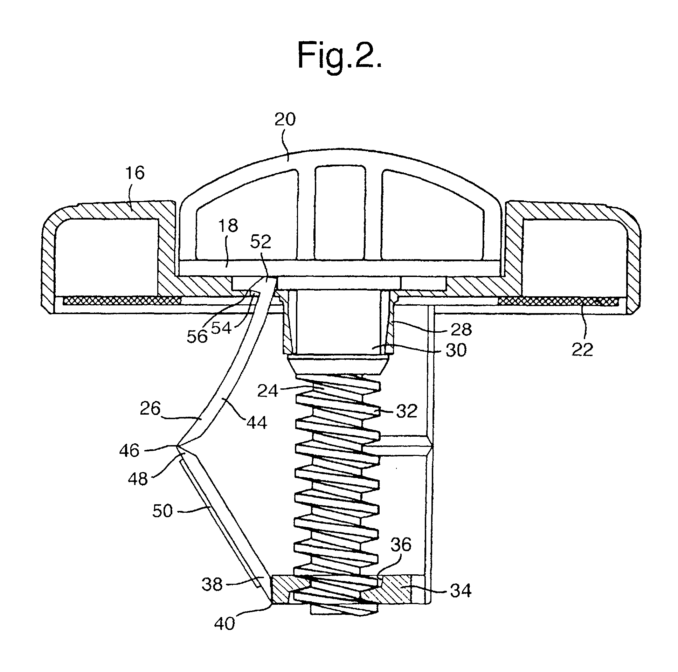

As shown in Figure 2, the cup-shaped element 16 and the circular plate element 18 are formed respectively with an axially extending bearing collar 28 and bearing shaft 30, which are engaged together to permit the relative rotation between the cup-shaped element 16 and the plate element 18. The central shaft 24 is an extension of the bearing shaft 30 and is formed with a screw thread 32.

The locking cage 26 comprises a further collar 34 having an internal screw thread 36, which is engaged with the screw thread 32 of the central shaft 24. A plurality of arms 38, in this instance three of them, extend between the collar 34 and the head 12. The arms 38 and the collar 34 may be manufactured as a unitary plastics element, with the arms 38 being connected to the collar 34 by integral film hinges 40. As shown in Figures 1 and 2, each arm comprises two sections 42, 44 joined by another film hinge 46 to form an outwardly projecting elbow 48, in use. The arm sections 42 adjacent the collar 34 are stiffened by means of stiffening struts 50, whereas the arm sections 44 remote from the collar 34 are not so stiffened and remain to some extent flexible. As shown in Figure 2, the free ends of the arm sections 44 are formed with tangs 52, these ends in use being inserted through openings 54 in the base of the cup-shaped element 16 whereupon the tangs 52 engage over a retaining edge 56 of the cup-shaped element 16 and hold the arms 38 of the locking cage 26 in the bent formation illustrated in Figure 1.

Operation of the fuel filler cap may best be understood by reference to Figures 1 to 3. Firstly, the cap 10 is inserted into a fuel filler pipe 70 until an end 72 of the pipe 70 is seated against the rubber sealing ring 22 on the undersurface of the head 12. At this point, the locking cage 26 is loosely received in the interior of the pipe 70.

Next, the manual grip 20, and hence the circular plate element 18, is rotated in the cup-shaped element 16. The central shaft 24 is thus caused to rotate with the circular plate element 18, while the locking cage 26 is held stationery (in a rotational sense) with the cup-shaped element 16.

As a result of the screw threaded engagement between the collar 34 and the central shaft 24, the relative rotation between the locking cage 26 and the central shaft 24 causes the collar 34 to travel longitudinally along the central shaft 24. As the collar 34 travels along the central shaft 24, the arms 38 bend increasingly at the elbows 48, and the elbows 48 are expanded generally radially outwardly as shown particularly in Figure 3.

Eventually, the elbows 48 come into contact with the interior wall 74 of the filler pipe 70. Continued rotation of the manual grip 20 at this point causes the elbows 48 to lock firmly against the internal wall 74. The location of the collar 34 and the stiffened sections 42 of the arms 38 within the filler pipe 70 is now completely fixed due to the rigidity of the stiffened arm sections 42 and the locking engagement of the elbows 48 with the internal pipe wall 74.

Thereafter, continued rotation of the manual grip 20, causes the central shaft 24 to move in the collar 34 (whereas before the collar 34 moved along the central shaft 24). As a result, the flexible arm sections 44 bend (see Figure 2) to increase the outward locking force on the elbows 48, and also the cup-shaped element 16 is driven down into increasingly firm engagement with the end 72 of the filler pipe 70. A very secure seal is thus generated between the filler pipe end 72 and the sealing ring 22 of the filler cap 10.

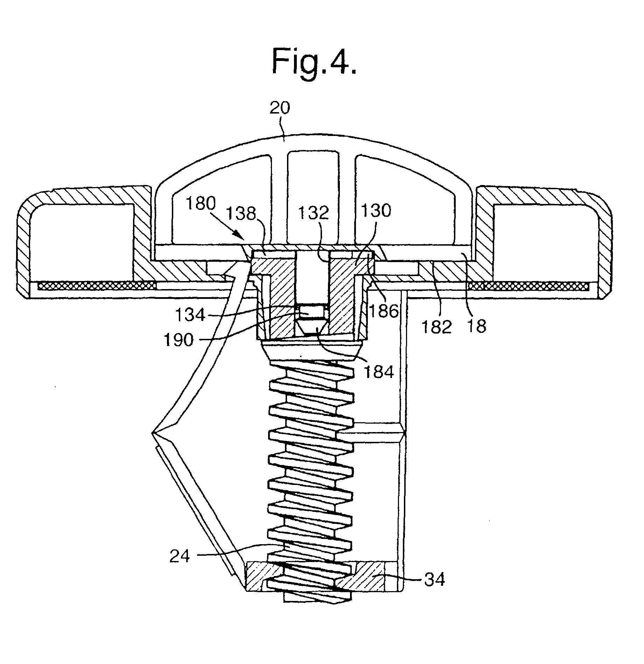

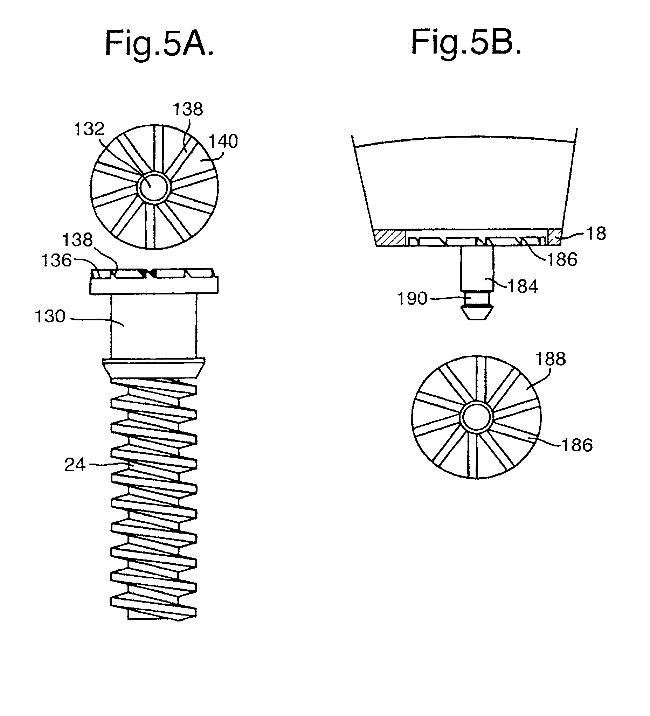

Turning now to Figures 4 and 5, a second embodiment of fuel filler cap according to the invention is illustrated. The general design is similar to that shown in Figures 1 to 3, and like parts are designated by the same reference numerals. Only the differences will be described below.

In this second embodiment, the connection between the manual grip 20 and the central shaft 24 is no longer integral but has been modified to include a clutch element 180. More especially, the manual grip 20 is integrally formed with the circular plate element 18 as before, but an undersurface 182 of the circular plate element 18 is formed with a central spigot 184, and a series of ratchet teeth 186 arranged in an annular array 188 about the spigot 184.

Correspondingly, an upper end 130 of the central shaft 24 is formed with a central opening 132 for receiving the spigot 184. As shown in Figure 4, the opening 132 includes a small inwardly projecting lip 134 while the spigot 184 includes a narrowed neck 190 and these two parts are engageable for retaining the spigot 184 in the opening 132. The end surface 136 of the central shaft 24 is likewise formed with ratchet teeth 138 arranged in an annular array 140, and the annular array 180 of ratchet teeth on the plate element 18 is engaged with the annular array 140 of ratchet teeth on the central shaft 24.

The operation of this second embodiment is the same as the operation of the first embodiment, except in that the clutch element 180 serves to limit the force which may be applied between the central shaft 24 and collar 34, and hence between the locking cage 26 and filler pipe 70, due to rotation of the manual grip 20.

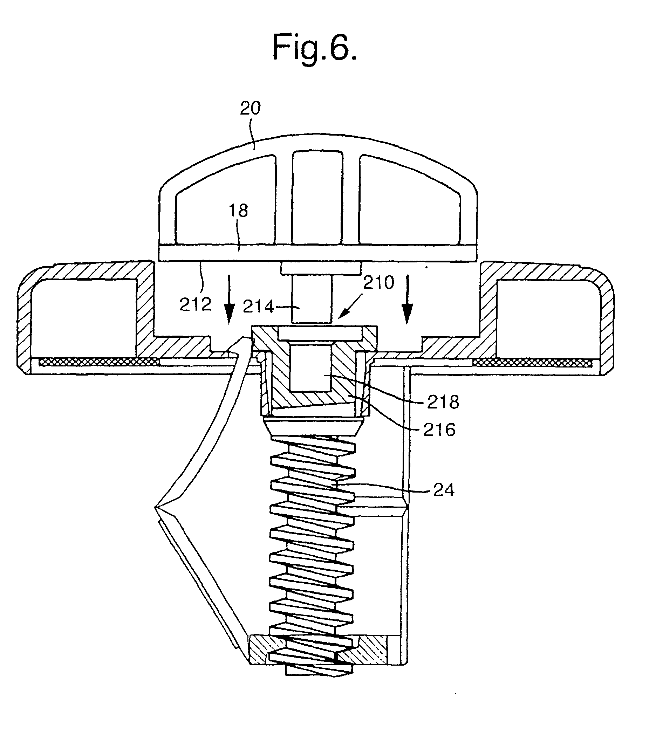

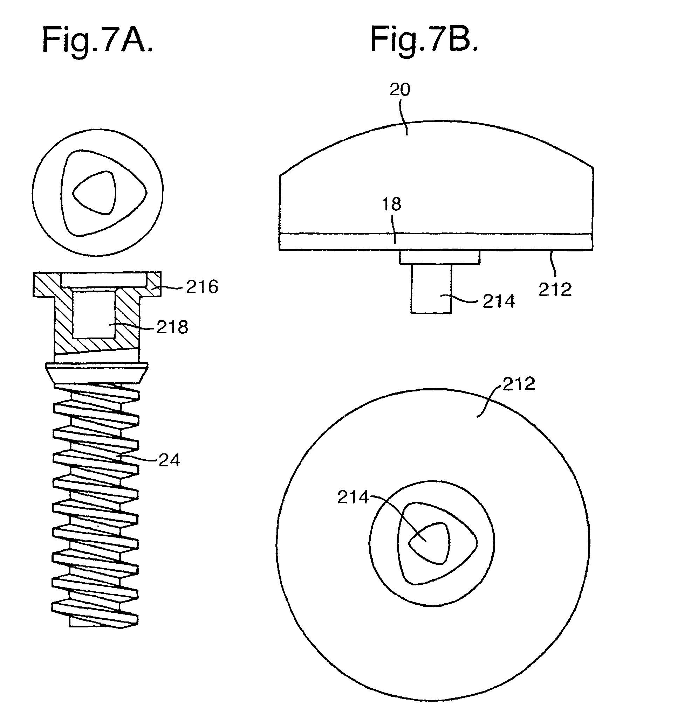

A further embodiment of filler cap according to the invention is illustrated in Figures 6 and 7. As before, the general design is similar to that of the filler cap 10 shown in Figures 1 to 3, and like parts are designated by the same reference numerals. Only the differences will be described.

As shown in Figure 6, the manual grip 20 and circular plate element 18 are not integrally connected to the central shaft 24 in this embodiment but are instead joined by a keying arrangement 210.

More particularly, the undersurface 212 of the circular plate element 18 is formed with a male key element 214 while the upper end 216 of the central shaft 24 is formed with a female key opening 218. The central shaft 24 with the female key opening 218 is illustrated in Figure 7A, and the manual grip 20 and circular plate element 18 with the male key element 214 is illustrated in Figure 7B.

In use, the male key element 214 is insertable into the female key opening 218 for locking the locking cage 26 within the petrol filler pipe 70 in the manner described with reference to Figures 1 to 3. Once the filler cap 10 has been locked in place, then the manual grip 20 and circular plate element 18 can be removed for reasons of security.

It will be appreciated that various modifications are possible to the described filler cap within the scope of the present invention. For example, whilst all of the described embodiments employ a plurality of bent arms 38 providing locking elbows 48, it will be apparent that the particular number of such arms is immaterial. Indeed, it would equally be possible to replace the locking arms with an alternative form of locking cage arrangement, for example in the form of a pair of expandable frusto-connical elements with one such element being supported on the collar 34 and the other such element being supported from the cup-shaped element 16.

The second embodiment described in relation to Figures 4 and 5 employs a relatively simple ratchet arrangement for limiting the outward locking force applied between the locking elbows 48 and the internal wall 74 of the petrol filler pipe 70. Some alternative force limiting arrangement or clutch could readily be used.

The third embodiment shown in Figures 6 and 7 is described as having a removable key in the form of a key element provided on the manual grip of the filler cap 10. An alternative security arrangement could equally well be used.

Furthermore, whilst the invention has been described as having application to a fuel filler cap for an automotive vehicle, it could equally well be employed in filler caps having other applications.

## Claims

1. A filler cap (10) comprising a head (12) for closing an end of a filler pipe (70) and a locking device (14) mounted on the head (12) and engageable within the filler pipe (70) for securing the cap (10) in place, the locking device (14) comprising a central externally threaded shaft (24) and a locking cage (26) surrounding the central shaft (24), the shaft (24) and the cage (26) being rotatable relative to one another to expand a locking section of the cage (26) generally radially outwardly into locking engagement with the internal wall (75) of the filler pipe (70), the locking cage (26) comprising an internally threaded collar (34) engaged with the central externally threaded shaft (24) for rotation relative thereto and longitudinal movement therealong, and a plurality of locking arms(38) for locking engagement with the internal wall (74) of the filler pipe (70), **characterised in that** each locking arm (38) has a first end fixedly attached to the collar and a second free end engaged with a portion (16) of the head and which locking arm is bent to form a locking elbow (48) which is arranged to expand generally radially outwardly in response to movement of the collar longitudinally along the shaft towards the head.

2. A filler cap (10) according to claim 1 **characterised in that** each arm (38) comprises a stiffened limb (42) on one side of the elbow (48) and a flexible limb (44) on the other side of the elbow (48).

3. A filler cap (10) according to claim 1 or 2 **characterised in that** there are three bent arms (38).

4. A filler cap (10) according to any preceding claim **characterised in that** the head (12) comprises an outer rim (16) and a central manual grip (20), the rim (16) and the grip (20) being rotatable relative to one another and one of the rim (16) and the grip (20) being engaged or engageable with the central shaft (24) whilst the other of the rm (16) and the grip (20) is engaged or engageable with the locking cage (26).

5. A filler cap (10) according to claim 4 **characterised in that** the central manual grip (20) is engaged or engageable with the central shaft (24) and the outer rim (16) is engaged or engageable with the locking cage (26).

6. A filler cap (10) according to any preceding claim **characterised in that** it comprises a clutch or a friction device (180) for limiting the locking force applied to the locking section of the cage in use.

7. A filler cap (10) according to claim 6 when dependent from claim 5 **characterised in that** said force limiting device (180) comprises a ratchet connection (186) between the central manual grip (20) and the central shaft (24).

8. A filler cap (10) according to any preceding claims **characterised in that** it comprises a locking key (214) for locking and unlocking the locking device (14).

9. A filler cap (10) according to claim 8 **characterised in that** the removable key comprises a male key element (214) and a female key opening (218), one being provided on the central manual grip (20) and the other being provided on the central shaft (24), and in which the central manual grip (20) is removable following locking of the locking device (14).

## Patentansprüche

1. Einfüllöffnungs-Verschlusskappe (10) mit einem Kopf (12) zum Verschließen eines Endes eines Einfüllrohrs (70) und einer Verriegelungsvorrichtung (14), die am Kopf (12) befestigt ist und in das Einfüllrohr (70) eingreifen kann, um die Kappe (10) in ihrer Lage zu sichern, wobei die Verriegelungsvorrichtung (14) einen zentralen Schaft (24) mit Außengewinde und einen Verriegelungskäfig (26) aufweist, welcher den zentralen Schaft (24) umgibt, wobei der Schaft (24) und der Käfig (26) relativ zueinander drehbar sind, um einen Verriegelungsabschnitt des Käfigs (26) im allgemeinen radial nach außen in einen Verriegelungseingriff mit der Innenwand (75) des Einfüllrohrs (70) zu erweitern, wobei der Verriegelungskäfig (26) einen Kragen (34) mit Innengewinde aufweist, der mit dem zentralen Schaft (24) mit Außengewinde in Eingriff steht, um eine Drehung relativ dazu und eine Längsbewegung entlang desselben durchzuführen, und einer Vielzahl an Verriegelungsarmen (38) für einen Verriegelungseingriff mit der Innenwand (74) des Einfüllrohrs (70), **dadurch gekennzeichnet, dass** jeder Verriegelungsarm (38) ein erstes Ende besitzt, das fest am Kragen angebracht ist, und ein zweites freies Ende, das mit einem Abschnitt (16) des Kopfs in Eingriff steht, und wobei der Verriegelungsarm gebogen ist, um einen Verriegelungsbogen (48) zu bilden, der so angeordnet ist, daß er als Reaktion auf die Längsbewegung des Kragens entlang des Schafts hin zum Kopf sich im allgemeinen radial nach außen hin erweitert.

2. Einfüllöffnungs-Verschlusskappe (10) nach Anspruch 1, **dadurch gekennzeichnet, dass** jeder Arm (38) ein versteiftes Glied (42) an einer Seite des Bogens (48) und ein biegsames Glied (44) an der anderen Seite des Bogens (48) aufweist.

3. Einfüllöffnungs-Verschlusskappe (10) nach Anspruch 1 oder 2, **dadurch gekennzeichnet, dass** drei gebogene Arme (38) vorhanden sind.

4. Einfüllöffnungs-Verschlusskappe (10) nach einem der vorhergehenden Ansprüche, **dadurch gekennzeichnet, dass** der Kopf (12) einen äußeren Radkranz (16) und einen zentralen, manuellen Griff (20) aufweist, wobei der Radkranz (16) und der Griff (20) relativ zueinander drehbar sind und entweder der Radkranz (16) oder der Griff (20) mit dem zentralen Schaft (24) in Eingriff steht oder in Eingriff bringbar ist, während der jeweilige andere Teil des Radkranzes (16) oder des Griffs (20) mit dem Verriegelungskäfig (26) in Eingriff steht oder in Eingriff bringbar ist.

5. Einfüllöffnungs-Verschlusskappe (10) nach Anspruch 4, **dadurch gekennzeichnet, dass** der zentrale manuelle Griff (20) mit dem zentralen Schaft (24) in Eingriff steht oder in Eingriff gebracht werden kann, und der äußere Radkranz (16) mit dem Verriegelungskäfig (26) in Eingriff steht oder in Eingriff bringbar ist.

6. Einfüllöffnungs-Verschlusskappe (10) nach einem der vorhergehenden Ansprüche, **dadurch gekennzeichnet, dass** sie eine Kupplungs- oder Reibungsvorrichtung (180) aufweist, um bei der Anwendung die auf den Verriegelungsabschnitt des Käfigs angelegte Kraft zu begrenzen.

7. Einfüllöffnungs-Verschlusskappe (10) nach Anspruch 6 bei Abhängigkeit von Anspruch 5, **dadurch gekennzeichnet, dass** die Kraftbegrenzungsvorrichtung (180) eine Rastverbindung (186) zwischen dem zentralen manuellen Griff (20) und dem zentralen Schaft (24) aufweist.

8. Einfüllöffnungs-Verschlusskappe (10) nach einem der vorhergehenden Ansprüche, **dadurch gekennzeichnet, dass** sie einen Verriegelungsschlüssel (214) zum Verriegeln und Entriegeln der Verriegelungsvorrichtung (14) aufweist.

9. Einfüllöffnungs-Verschlusskappe (10) nach Anspruch 8, **dadurch gekennzeichnet, dass** der abziehbare Schlüssel ein männliches Schlüsselelement (214) und eine weibliche Schlüsselöffnung (218) umfasst, wobei der eine am zentralen manuellen Griff (20) angeordnet ist, und die andere am zentralen Schaft (24) angeordnet ist, und wobei der zentrale manuelle Griff (20) nach dem Verriegeln der Verriegelungsvorrichtung (14) abziehbar ist.

## Revendications

1. Bouchon de remplissage (10) comprenant une tête (12) pour fermer une extrémité d'un tuyau de remplissage (70) et un dispositif de verrouillage (14) monté sur la tête (12) et pouvant être engagé à l'intérieur du tuyau de remplissage (70) pour fixer le couvercle (10) en place, le dispositif de verrouillage (14) comprenant un axe central fileté à l'extérieur (24) et une cage de verrouillage (26) entourant l'axe central (24), l'axe (24) et la cage (26) pouvant tourner l'un par rapport à l'autre afin d'étendre une section de verrouillage de la cage (26) d'une manière générale radialement vers l'extérieur en engagement de verrouillage avec la paroi interne (75) du tuyau de remplissage (70), la cage de verrouillage (26) comprenant un collier fileté à l'intérieur (34) engagé sur l'axe central fileté à l'extérieur (24) pour effectuer une rotation par rapport à celui-ci et un mouvement longitudinal le long de celui-ci, et une pluralité de bras de verrouillage (38) pour réaliser un engagement de verrouillage avec la paroi interne (74) du tuyau de remplissage (70), **caractérisé en ce que** chaque bras de verrouillage (38) présente une première extrémité fixement attachée au collier et une deuxième extrémité libre engagée avec une portion (16) de la tête, lesdits bras de verrouillage étant pliés de manière à former un coude de verrouillage (48) qui est arrangé de façon à se déployer d'une manière générale radialement vers l'extérieur en réponse à un mouvement du collier longitudinalement le long de l'axe en direction de la tête.

2. Bouchon de remplissage (10) suivant la revendication 1, **caractérisé en ce que** chaque bras (38) comprend une branche raidie (42) sur un côté du coude (48), et une branche flexible (44) de l'autre côté du coude (48).

3. Bouchon de remplissage (10) suivant la revendication 1 ou 2, **caractérisé en ce qu'**il y a trois bras pliés (38).

4. Bouchon de remplissage (10) suivant l'une quelconque des revendications précédentes, **caractérisé en ce que** la tête (12) comprend une couronne extérieure (16) et une poignée manuelle centrale (20), la couronne (16) et la poignée (20) pouvant tourner l'un par rapport à l'autre, et une parmi la couronne (16) et la poignée (20) étant engagée ou pouvant être engagée avec l'axe central (24) tandis que l'autre parmi la couronne (16) et la poignée (20) est engagée ou peut être engagée avec la cage de verrouillage (26).

5. Bouchon de remplissage (10) suivant la revendication 4, **caractérisé en ce que** la poignée manuelle centrale (20) est engagée ou peut être engagée avec l'axe central (24), et la couronne extérieure (26) est engagée ou peut être engagée avec la cage de verrouillage (26).

6. Bouchon de remplissage (10) suivant l'une quelconque des revendications précédentes, **caractérisé en ce qu'**il comprend une griffe ou un dispositif de friction (180) pour limiter la force de verrouillage appliquée à la section de verrouillage de la cage lors de l'utilisation.

7. Bouchon de remplissage (10) suivant la revendication 6 lorsqu'elle dépend de la revendication 5, **caractérisé en ce que** ledit dispositif de limitation de force (180) comprend un raccord à cliquet (186) entre la poignée manuelle centrale (20) et l'axe central (24).

8. Bouchon de remplissage (10) suivant l'une quelconque des revendications précédentes, **caractérisé en ce qu'**il comprend une clé de verrouillage (214) pour verrouiller et déverrouiller le dispositif de verrouillage (14).

9. Bouchon de remplissage (10) suivant la revendication 8, **caractérisé en ce que** la clé amovible comprend un élément de clé mâle (214) et une ouverture de clé femelle (218), l'un étant prévu sur la poignée manuelle centrale (20) et l'autre étant prévue sur l'axe central (24), et dans lequel la poignée manuelle centrale (20) peut être retirée à la suite du verrouillage du dispositif de verrouillage (14).
